(19) **Europäisches Patentamt European Patent Office Office européen des brevets**

(11) **EP 4 744 489 A1**

(12) **EUROPEAN PATENT APPLICATION**
published in accordance with Art. 153(4) EPC

(43) Date of publication:
**20.05.2026 Bulletin 2026/21**

(21) Application number: **24842982.1**

(22) Date of filing: **05.07.2024**

(51) International Patent Classification (IPC):
*A01N 59/00* (2006.01)   *A01N 25/34* (2006.01)
*A01P 1/00* (2006.01)   *C01B 32/28* (2017.01)
*C09D 1/00* (2006.01)   *C09D 17/00* (2006.01)

(52) Cooperative Patent Classification (CPC):
A01N 25/34; A01N 59/00; A01P 1/00; C01B 32/28;
C09D 1/00; C09D 17/00

(86) International application number:
**PCT/JP2024/024480**

(87) International publication number:
**WO 2025/018189 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023 JP 2023115890**

(71) Applicants:
• **Daicel Corporation
Osaka-shi, Osaka 530-0011 (JP)**
• **HONDA MOTOR CO., LTD.
Tokyo 105-8404 (JP)**

(72) Inventors:
• **YOSHIKAWA, Taro
Tokyo 108-8230 (JP)**

• **KAGA, Akira
Tokyo 108-8230 (JP)**
• **MAHIKO, Tomoaki
Tokyo 108-8230 (JP)**
• **KURASHINA, Daisuke
Wako-shi, Saitama 351-0193 (JP)**
• **USHIJIMA, Teruyuki
Wako-shi, Saitama 351-0193 (JP)**
• **MAI, Phuong Tu
Wako-shi, Saitama 351-0193 (JP)**
• **FUJIKI, Kenji
Wako-shi, Saitama 351-0193 (JP)**

(74) Representative: **Grünecker Patent- und
Rechtsanwälte
PartG mbB
Leopoldstraße 4
80802 München (DE)**

(54) **MATERIAL, AND FILTER WITH MATERIAL**

(57)   Provided are a material and a filter with a material which have an excellent antiviral effect against various effects even on a dry surface (in a gas phase) assumed as a condition under which a filter is actually used. A material 3 of the present disclosure comprises a main body portion 4 having a shape of irregularities on a surface thereof, and nanodiamond particles 5 deposited on the irregularities. In a filter 1 with a material according to the present disclosure, the material 3 is attached to a filter 2.

FIG. 1

EP 4 744 489 A1

## Description

Technical Field

The present disclosure relates to a material, and a filter with a material. More specifically, the present disclosure relates to a material and a filter with a material which have a removal effect and an antibacterial/antiviral effect against bacteria and viruses. The present application claims priority to Japanese Patent Application No. 2023-115890 filed in Japan on 14 July, 2023, the disclosure of which is incorporated herein.

Background Art

Many viral diseases that are caused by COVID-19, influenza viruses, norovirus and the like are transmitted through various infection routes such as droplet infection, droplet nuclei infection and contact infection. Among them, the droplet nuclei infection is a route where very small particles generated from a patient are suspended in air for a prolonged time, and a person sharing space with the patient is infected through the inhalation of the virus, which may cause spreading of infection particularly in narrow closed space.

COVID-19 and influenza viruses are a type of enveloped virus having an envelope, which is a lipid membrane, and have relatively low resistance as sterilization with lipid-soluble ethanol is effective against the virus, for example. On the other hand, norovirus is a type of non-enveloped virus having no envelope, and are known as a virus having high resistance as a sufficient effect against the virus cannot be obtained simply by ethanol sterilization, and the virus is resistant to drying and heating, for example.

Further, it is known that the norovirus is infectious enough to cause infection even by 100 or less virus particles, so that when a very small amount of vomit or feces from an infected person is scattered in air, it acts as a carrier, resulting in occurrence of droplet nuclei infection.

As an action to prevent the droplet nuclei infection, bacteria or a virus suspended in space has been heretofore trapped by a filter, and removed. However, mere trapping of bacteria or a virus has a problem that the bacteria or virus on the filter remains infectious, and the filter itself can become a source of infection.

For overcoming the above problem, a filter or a material capable of being attached to and detached from a filter is known, which has an antibacterial effect or an antiviral effect against the trapped bacteria or virus.

Patent Literature 1 discloses that zinc phosphatization treatment is performed on a surface of a metal substrate to form, on the surface, a zinc phosphate film having irregularities in the order of microns, and the zinc phosphate film exhibits an antifungal action, a bactericidal action and an antiviral action.

Nanodiamond particles are ultrafine diamond having a very large specific surface area, and are also used as an antibacterial/antiviral component by virtue of its characteristic.

Patent Literature 2 discloses that when a dispersion liquid containing nanodiamond particles and a solution containing an influenza virus are mixed, the dispersion liquid containing the nanodiamond particles exhibits an inactivating effect on the influenza virus.

Patent Literature 3 discloses an effect of imparting an antiviral property to a wall and/or a ceiling by applying thereto a nonwoven fabric sheet impregnated with a coating solution containing silver fine particles, diamond fine particles, ethanol and water.

Citation List

Patent Literature

Patent Literature 1: International Publication WO 2021/193843
Patent Literature 2: Japanese Patent Laid-Open No. 2022-161727
Patent Literature 3: Japanese Patent Laid-Open No. 2023-7158

Summary of Invention

Technical Problem

However, for the material described in Patent Literature 1, an antiviral effect against bacteriophage Qβ under a wet condition (in a liquid phase) is disclosed, but an effect against other viruses and an effect on a dry surface (in a gas phase) that is assumed as a condition under which a filter is actually used are not disclosed, and further studies are needed.

For the dispersion liquid containing nanodiamond particles, which is described in Patent Literature 2, an antiviral effect against an influenza virus under a wet condition (in a liquid phase) is disclosed, but an effect against other viruses and an effect on a dry surface (in a gas phase) that is assumed as a condition under which a filter is actually used are not disclosed, and further studies are needed.

For the antiviral nonwoven fabric sheet described in Patent Literature 3, a specific effect against viruses other than COVID-19 and an effect on a dry surface (in a gas phase) that is assumed as a condition under which a filter is actually used are not disclosed.

Accordingly, an object of the present disclosure is to provide a material and a filter with a material which exhibit an excellent antiviral effect against various viruses.

Solution to Problem

The inventors of the present disclosure have intensively conducted studies for achieving the above object, and resultantly found that the material, which comprises a main body portion having a shape of irregularities on a surface thereof, and nanodiamond particles deposited on the irregularities, exhibits an excellent antiviral effect against various viruses. The present disclosure has been completed on the basis of the findings.

That is, the present disclosure provides a material comprising a main body portion having a shape of irregularities on a surface thereof, and nanodiamond particles deposited on the irregularities.

The main body portion preferably comprises a substrate, and a film formed on the substrate.

The film is preferably a zinc phosphate film.

A zeta potential of the nanodiamond particles is preferably positive.

The present disclosure also provides a filter with a material in which the above-mentioned material is attached to a filter main body.

The present disclosure also provides a nanodiamond particle dispersion liquid for use in production of the above-mentioned material.

The present disclosure also provides a product which is at least one selected from the group consisting of a coating solution, a plating solution and a chemical conversion treatment solution each containing the nanodiamond particle dispersion liquid for use in production of the above-mentioned material.

Advantageous Effects of Invention

The material of the present disclosure, which has the configuration described above, thus can exhibit an antiviral effect against various viruses. According to the present disclosure, a filter with a material in which the above-mentioned material is attached thereto can be provided.

Brief Description of Drawings

[Figure 1] Figure 1 is a schematic view of a filter with a material according to an embodiment of the present disclosure.
[Figure 2] Figure 2 is an enlarged schematic view of a material according to an embodiment of the present disclosure.
[Figure 3] Figure 3 is a diagram for illustrating the procedure of calculating a distance between adjacent convex portions.
[Figure 4] Figure 4 is a schematic diagram of a preparation process for a material according to an embodiment of the present disclosure.
[Figure 5] Figure 5 is a scanning electron micrograph of a material prepared in Comparative Example 1.
[Figure 6] Figure 6 is a scanning electron micrograph of a material prepared in Example 1.
[Figure 7] Figure 7 is a scanning electron micrograph of a material prepared in Example 2.
[Figure 8] Figure 8 is a scanning electron micrograph of a material prepared in Example 3.
[Figure 9] Figure 9 is a scanning electron micrograph of a material prepared in Example 4.
[Figure 10] Figure 10 is a scanning electron micrograph of a material prepared in Example 5.

Description of Embodiments

In the present specification, a filter to which the material is attached may be referred to as a "filter with a material". In the present specification, the effect evaluated by the "evaluation test for inhibitory performance against viruses", which will be described later and in which The Japan Electrical Manufacturers' Association Standard JEM1467, "Air Purifier for Household Use", Appendix F "Evaluation Test Method for Inhibitory Performance against Virus Trapped on Filter" is used as a reference, may be referred to as an "antiviral effect".

[Material and filter with material]

A material according to an embodiment of the present disclosure comprises a main body portion having a shape of irregularities on a surface thereof, and nanodiamond particles deposited on the irregularities.

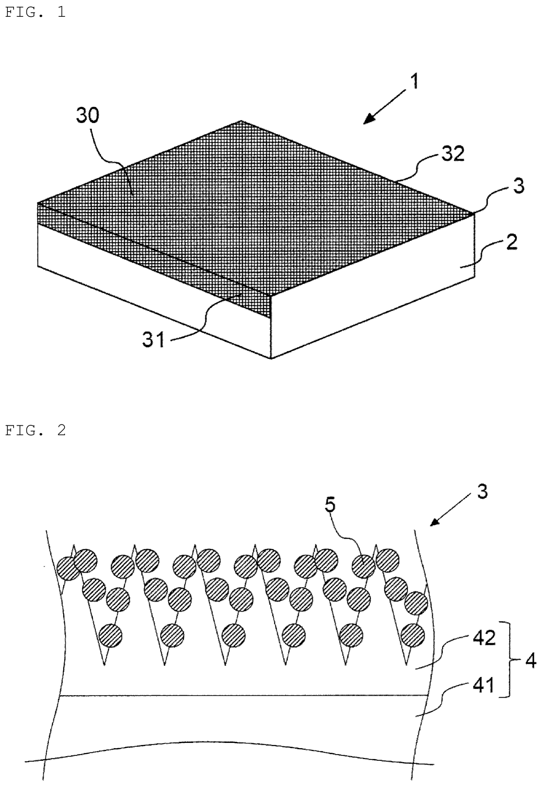

Hereinafter, an embodiment of a material and a filter with a material according to the present disclosure will be described with reference to the drawings, but the material and the filter with a material according to the present disclosure are not limited to the present embodiment. Figure 1 is a schematic view showing an embodiment of the filter with a material according to the present disclosure.

As shown in Figure 1, the filter 1 with a material comprises a rectangular box-shaped filter main body 2, and a mesh-shaped material 3 attached to the filter main body 2 so as to cover at least a part of the filter main body 2. In the present embodiment, a case in which the material 3 is attached to the filter main body 2 so as to cover the whole of one surface of the filter main body 2 will be described, but the present disclosure is not limited thereto. At least a part of the filter main body 2 should be covered with the material 3. The filter main body is not particularly limited, and a known or conventional filter can be used.

The material 3 comprises a rectangular purification portion 30 that is substantially identical in shape to the filter main body 2 in a plan view, and a belt-shaped first leg portion 31 and second leg portion 32 extending along long sides facing each other, among the four sides of the purification portion 30. By having the leg portions, the material 3 is held by the filter main body 2, so that use as a united body can be made.

Figure 2 is an enlarged schematic view of an embodiment of the material 3. The material 3 comprises a main body portion 4 and nanodiamond particles 5. The main body portion 4 comprises a substrate 41 and a film 42. The substrate 41 is, for example, a mesh-shaped metal substrate, more specifically, an aluminum alloy mesh substrate including A5056. On a surface of the substrate 41, a film 42 is formed, more specifically, a zinc phosphate film having fine irregularities is formed by zinc phosphatization treatment which will be described later, so that a shape of irregularities is formed on a surface of the main body portion 4. Further, on a surface of the film 42 (the irregularity surface of the main body portion 4), nanodiamond particles 5 are deposited by diamond particle deposition treatment which will be described later. Hereinafter, a case where the aluminum alloy mesh substrate is used as the substrate 41, and the zinc phosphate film is used as film 42 will be described, but the present disclosure is not limited thereto.

(Main body portion)

The main body portion preferably includes at least a substrate. The main body portion more preferably includes the substrate, and a film formed on the substrate. Each of the substrate and the film may have only one layer, or may be a laminated body of two or more layers.

The substrate is not particularly limited, and a known or conventional metal substrate or resin substrate can be used. Examples of the metal substrate include substrates made from aluminum, an aluminum alloy containing aluminum as a main component, copper, manganese, silicon, magnesium, zinc, nickel and the like, iron, stainless steel, magnesium, a magnesium alloy, titanium, a titanium alloy, copper, a copper alloy, nickel, a nickel alloy, chromium, a chromium alloy, or the like. Examples of the resin substrate include substrates made from a polyolefin-based resin, a polyolefin-based copolymer resin, a polyester-based resin, an acryl-based resin, a polyamide-based resin, a polyimide-based resin, a polycarbonate-based resin, a phenol-based resin, an epoxy-based resin, a silicon-based resin, a styrene-based resin, a fluorine-based resin, a urethane-based resin, or the like. Only one of or two or more of the materials for forming the substrate may be used.

The substrate is preferably a metal substrate from the viewpoint of durability and processability. In particular, from the viewpoint of lightness and processability, a substrate made from aluminum or an aluminum alloy is preferred, and a substrate made from an aluminum alloy is more preferred.

The shape of the substrate is not particularly limited, and a shape such as a mesh shape, a flat plate shape or a nonwoven fabric shape can be selected, for example. Among them, a mesh shape is preferred from the viewpoint that the function of the filter main body is not impaired in the case of attachment to the filter main body.

When the main body portion has a shape of irregularities on a surface thereof, the surface of the substrate may be smooth, or irregular. When the substrate has irregularities on a surface thereof, the irregularities may be used to form irregularities on a surface of the main body portion.

The thickness of the substrate is not particularly limited. For example, a thickness of 0.1 $\mu$m or more can be selected.

The film has an ability to impart a function to the main body portion. Examples of the function include an antiviral effect, a bactericidal effect, an antifungal effect, and an effect of depositing nanodiamond particles.

The film is not particularly limited, and a known or conventional film can be used. Examples thereof include phosphoric acid salt films such as a zinc phosphate film, a manganese phosphate film, an iron phosphate film and a calcium phosphate film. Among them, a zinc phosphate film is preferred from the viewpoint that an excellent antiviral effect is obtained, it is easy to adjust the size of irregularities, and nanodiamond particles are easily deposited. The film may be provided on the substrate with another film such as a zinc film interposed therebetween for improving the adhesion to the substrate.

The thickness of the film is not particularly limited, and a thickness of 0.1 $\mu$m or more can be selected, for example.

The main body portion has a shape of irregularities on a surface thereof. The shape of irregularities may be present on the substrate surface, or on the film. When the substrate has a shape of irregularities on a surface thereof, the film may be formed along the irregularities so as to maintain the irregularities on the substrate surface. In the main body portion 4 of Figure 2, the film 42 having a shape of irregularities on a flat surface of the substrate 41.

The distance between convex portions in the irregularities of the main body portion is preferably 0.5 to 50.0 $\mu$m, and more preferably 0.5 to 6.0 $\mu$m, from the viewpoint that an excellent antiviral effect is obtained, it is easy to adjust the size of irregularities, and nanodiamond particles are easily deposited. The distance between convex portions can be calculated by a procedure which will be described later.

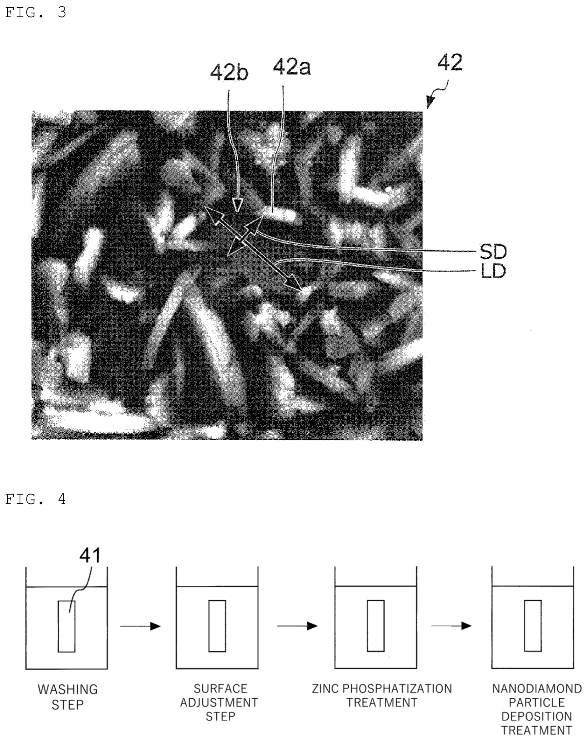

Figure 3 is a diagram for illustrating the procedure of calculating a distance between adjacent convex portions. As shown in Figure 3, numerous blade-shaped convex portions 42a that are irregular in direction (portions that appear bright in Figure 3) are formed on the surface of the film 42 which is a zinc phosphate film. Thus, numerous concave portions 42b as concave spaces defined by the numerous convex portions 42a (portions that appear dark in Figure 3) are formed on the surface of the film 42 which is a zinc phosphate film.

In the present specification, the length of one side of the concave portion 42b in a plane view is defined as a distance between adjacent convex portions 42a in a plane view. More specifically, the shape in a plane view of each concave portion 42b formed on the surface of the film 42 which is a zinc phosphate film is assumed as a shape in which a longer direction LD and a shorter direction SD orthogonally crossing LD (for example, a rectangular shape or elliptical shape), the longer direction LD and the shorter direction SD orthogonally crossing LD are defined with respect to the concave portion 42b, and the length of the concave portion 42b along the longer direction LD and the shorter direction SD is defined as a distance between adjacent convex portions 42a. On the basis of the above definition, the length of each concave portion 42b along the longer direction LD and the shorter direction SD is calculated, the minimum value of the length along the shorter direction SD is taken as a minimum value of the distance between convex portions 42a, and the maximum value of the length along the longer direction LD is taken as a maximum value of the distance between convex portions 42a.

The thickness of the main body portion is not particularly limited, and a thickness of 0.1 $\mu$m or more can be selected, for example. From the viewpoint of stably forming a shape of irregularities, the thickness is preferably 0.1 $\mu$m or more, more preferably 0.25 $\mu$m or more, and further more preferably 0.5 $\mu$m or more.

(Nanodiamond particles)

In the present specification, the term "nanodiamond particles" refers to diamond particles in which the size of primary particles (average primary particle size) is less than 1,000 nm. For example, the average primary particle size of the nanodiamond particles is preferably 100 nm or less, more preferably 60 nm or less, further more preferably 50 nm or less, and particularly preferably 30 nm or less. The lower limit of the average primary particle size of the nanodiamond particles may be, for example, 1 nm.

The nanodiamond particles are not particularly limited, and known or conventional nanodiamond particles can be used. The nanodiamond particles may be surface-modified nanodiamond particles, or non-surface-modified nanodiamond particles. Non-surface-modified nanodiamond particles have a large number of hydroxy groups (-OH) or carboxy groups (-COOH) on the surface. Only one type of or two or more types of nanoparticles may be used.

In the surface-modified nanodiamond particles, the compound or the functional group with which nanodiamond particles are surface-modified is not particularly limited, and examples thereof include a hydrogen group (C-H group), silane compounds, a phosphonate ion or a phosphonate residue, surface modification groups having a vinyl group at an end thereof, an amide group, cations of cationic surfactants, groups containing a polyglycerin chain, and groups containing a polyethylene glycol chain.

In particular, the nanodiamond particles preferably have at least a hydrogen group, a hydroxy group or a carboxy group on the surface from the viewpoint of an antiviral effect.

The zeta potential of the nanodiamond particles may be negative or positive. Nanodiamond particles having a large number of hydroxy groups or carboxy groups on the surface, such as non-surface-modified nanodiamond particles, tend to have a negative zeta potential because of the oxygen-based functional groups. On the other hand, nanodiamond particles having an increased number of hydrogen groups on the surface by, for example, reduction treatment such as hydrogenation treatment, tend to have a positive zeta potential because the surface is terminated with hydrogen. In particular, the zeta potential of the nanodiamond particles is preferably positive. There is a tendency that a sufficient antiviral effect is likely to be exhibited against a wide range of viruses by using nanodiamond particles having a positive zeta potential.

In the present specification, the phrase "the zeta potential of the nanodiamond particles is negative" means that the value of a zeta potential at 25°C in a dispersion solvent having a pH of 5 to 9 and an ion intensity of $1.0 \times 10^{-4}$ M is a negative value as measured by, for example, the laser Doppler electrophoresis method. For example, the zeta potential is preferably - 80 to -5 mV, more preferably -70 to -10 mV, and further more preferably -60 to -20 mV.

In the present specification, the phrase "the zeta potential of the nanodiamond particles is positive" means that the value of a zeta potential at 25°C in a dispersion solvent having a pH of 5 to 9 and an ion intensity of $1.0 \times 10^{-4}$ M is a positive value as measured by, for example, a laser Doppler electrophoresis method. For example, the zeta potential is preferably 5 to 80 mV, more preferably 10 to 70 mV, and further more preferably 20 to 60 mV.

For example, the average primary particle size (D50) of the nanodiamond particles is preferably 100 nm or less, more preferably 60 nm or less, further more preferably 50 nm or less, and particularly preferably 30 nm or less. The lower limit of the average primary particle size of the nanodiamond particles may be, for example, 1 nm. An average primary particle size of 100 nm or less enables the nanodiamond particles to be more densely deposited on the film surface. The average primary particle size can be measured by image analysis (electron microscopy such as TEM or SEM) and X-ray diffractometry in a powdered state. In the case of electron microscopy, a particle size corresponding to a cumulative frequency of 50% from the smallest particle size in a circle diameter-equivalent particle size distribution (on a number basis) based on electron microscope observation can be taken as an average primary particle size. When the nanodiamond particles have substantially a spherical shape, the average value of the largest diameters may be taken as an average primary particle size.

Concerning a form in which the nanodiamond particles are deposited on the surface of the main body portion, the nanodiamond particles may be deposited in a state where the primary particles are dispersed, or in the state of secondary particles (aggregates) in which a plurality of the primary particles are aggregated. The size of the secondary particles (average secondary particle size) is about 10 to 200 times the average particle size of the primary particles. For example, the average secondary particle size is preferably 50 to 1,000 nm, more preferably 50 to 500 nm, further more preferably 50 to 200 nm, and particularly preferably 50 to 100 nm. When the average secondary particle size is in the above-described range, the secondary particles are hardly precipitated in a nanodiamond particle deposition treatment step which will be described later, so that the particles can be uniformly deposited on the film surface. The deposition form can be observed by image analysis (electron microscopy such as TEM or SEM).

The amount (A) of the nanodiamond particles applied per surface area of the material is preferably 0.02 mg/cm$^2$ or more, more preferably 0.05 mg/cm$^2$ or more, further more preferably 0.1 mg/cm$^2$ or more, and particularly preferably 0.2 mg/cm$^2$ or more. The amount (A) of the nanodiamond particles applied per surface area of the material is preferably 1 mg/cm$^2$ or less, more preferably 0.7 mg/cm$^2$ or less, further more preferably 0.5 mg/cm$^2$ or less, and particularly preferably 0.4 mg/cm$^2$ or less. Here, the amount (A) applied is calculated by a procedure which will be described later. The amount applied can be adjusted by changing the concentration of nanodiamond particles in a nanodiamond particle dispersion liquid and the solvent of the dispersion liquid in nanodiamond particle deposition treatment which will be described later.

For the nanodiamond particles, for example, detonation nanodiamond (that is, nanodiamond formed by detonation), high pressure and high temperature method nanodiamond (that is, nanoparticles obtained by pulverizing bulk diamond formed by a high pressure and high temperature method), or chemical vapor deposition nanodiamond (that is, nanoparticles obtained by pulverizing thin film diamond obtained by chemical vapor deposition) can be used. Among them, detonation nanodiamond is preferred in that the particle size of primary particles is in the order of single-digit nanometers.

The detonation nanodiamond includes air-cooling detonation nanodiamond (that is, nanodiamond formed by air-cooling detonation), and water-cooling detonation nanodiamond (that is, nanodiamond formed by water-cooling detonation). Of these, air-cooling detonation nanodiamond is preferred in that it is smaller in size of primary particles than water-cooling detonation diamond. The nanodiamond particles may be primary particles of nanodiamond, or secondary particles in which a plurality of the primary particles are aggregated (agglutinated).

In an embodiment of the material of the present disclosure, the material may be attached to a known or conventional filter main body, and used as a filter with a material. The filter with a material may be used for vehicle's air conditioners, air conditioners, air purifiers and the like.

In an embodiment of the material of the present disclosure, the condition for use of the filter with a material is not particularly limited, and it can be used under any of, for example, gas phase, liquid phase and solid phase conditions. In particular, use in a gas phase is preferred from the viewpoint of easily exhibiting the effect of the material. The state of each of the phases is not particularly limited. For example, in a gas phase, there is no limitation on any of the gas type, temperature, humidity and pressure, but when used for vehicle's air conditioners, air conditioners, air purifiers and the like as described above, the material is used in air at normal pressure and temperature.

The material of the present disclosure exhibits an antiviral effect against various viruses by having a main body portion having irregularities in the order of microns, and nanodiamond particles. Examples of the virus include enveloped viruses, and non-enveloped viruses. In particular, the material is excellent in an antiviral effect against non-enveloped viruses, and particularly excellent in an antiviral effect against feline calicivirus. From the view point of preventing the infection, it is preferred that the logarithmic decrement value be 1.0 or more and it is more preferred that the logarithmic decrement value be 2.0 or more in an evaluation test method for inhibitory performance against feline calicivirus, which will be described later.

The irregularities in the order of microns are considered to exhibit a bactericidal effect by a physical action coming from the shape of the irregularities (for example, an action of allowing bacteria to stick into the irregularities, upon which cell walls themselves deform, leading to death). On the other hand, for example, the influenza virus and feline calicivirus have sizes of 80 to 120 nm and 27 to 35 nm, respectively, each of which is about one tenth of the size of common bacteria (0.5 to 2 $\mu$m), thus being smaller than bacteria. For this reason, there is a possibility that the virus hardly sticks into irregularities in the order of microns, and it is difficult to exhibit an antiviral effect. To address this, in the material of the present disclosure, a large specific surface area from the irregularities is used to deposit a large number of nanodiamond particles with stability. Thus, this is believed to exhibit a combined effect from the shape of irregularities and nanodiamond particles, which includes the nanodiamond particles acting even on a virus entering convex portions of the irregularities. Therefore, the material of the present disclosure is believed to exhibit an excellent antibacterial effect and antiviral effect against microorganisms with various sizes by having the configuration described above.

In an embodiment of the material of the present disclosure, a material having at least one of an antiviral effect, an antibacterial effect and an antifungal effect may be distinctively referred to as a "functional material". Here, in the definition of the effects, general definition in the art can be incorporated. The term "antiviral effect" means an effect evaluated by, for example, ISO 21702: 2019 Measurement of antiviral activity on plastics and other non-porous surfaces. The term "antibacterial effect" means an effect evaluated by, for example, JIS Z 2801: 2012 "Antibacterial products-Test for antibacterial activity and efficacy". The term "antifungal effect" means an effect evaluated by, for example, JIS Z 2911: 2018 "Methods of test for fungus resistance".

[Method for production of material]

The material can be prepared by depositing nanodiamond particles on the main body portion by a known or conventional method. The material can be prepared by, for example, applying a nanodiamond particle dispersion liquid to the main body portion, and performing drying to deposit nanodiamond particles. When the main body portion includes the substrate and the film, the material can be prepared by performing treatment for formation of a film on the substrate to form, on a metal surface, a film having fine irregularities, then applying a nanodiamond particle dispersion liquid, and performing drying to deposit nanodiamond particles.

In the following, a method for producing a material 3 shown in Figure 2 is described as an example. Figure 4 is a schematic diagram of a preparation process for an embodiment of the material 3. As shown in Figure 4, the material 3 can be prepared by, for example, performing a washing step, a surface adjustment step, zinc phosphatization treatment, and nanodiamond particle deposition treatment on the substrate 41. More specifically, the method comprises a step of washing, degreasing and rinsing the substrate 41 (for example, an aluminum alloy mesh substrate) processed into a shape that enables attachment to a filter main body, a surface adjustment step of immersing the substrate 41 in a surface adjustment solution to form, on a surface of the substrate 41, a nucleus from which a crystal is derived, a step of forming, on the surface of the substrate 41, the film 42 which is a zinc phosphate film having irregularities in the order of microns, by performing zinc phosphatization treatment in which a zinc phosphate treatment solution is contacted over a predetermined time, and a step of depositing a plurality of nanodiamond particles 5 on the surface of the film 42 by immersion in a nanodiamond particle dispersion liquid over a predetermined time, followed by drying.

Figure 4 shows a case of zinc phosphatization treatment, but the present disclosure is not limited thereto. For example, another phosphatization treatment (manganese phosphatization treatment, iron phosphatization treatment or calcium phosphatization treatment), chemical conversion treatment or the like which involves boehmite treatment, chromate treatment, zincate treatment or the like, or surface treatment or the like which involves plasma treatment, blast treatment or the like may be applied. Among them, zinc phosphatization treatment is preferred in that the size of irregularities is easily adjusted.

In the present specification, the term "irregularities in the order of microns" means a state in which the distance between adjacent convex portions which is calculated by the procedure described with reference to Figure 3 is within a range of 0.1 to 1,000 $\mu$m, and numerous irregularities including the convex portions are formed.

(Surface adjustment step)

The surface adjustment step is not particularly limited, and a known or conventional surface adjustment solution can be used. For example, "PL-X" and "PL-XG" manufactured by Nihon Parkerizing Co., Ltd., which are adjusted to a predetermined concentration [g/L], are used. By changing the concentration of the surface adjustment solution, irregularities formed on the surface of the metal substrate can be changed to a rough form or a fine form. The irregularities tend to become finer as the concentration of the surface adjustment solution is increased. From the viewpoint of forming irregularities in the order of microns, the concentration of the surface adjustment solution is preferably 0.1 g/L or more, more preferably 1.0 g/L or more, and further more preferably 2.0 g/L or more. From the viewpoint of cost-effectiveness, the concentration of the surface adjustment solution is preferably 10 g/L or less, and more preferably 5.0 g/L or less.

(Zinc phosphatization treatment)

The zinc phosphatization treatment is not particularly limited, and a known or conventional zinc phosphate treatment solution can be used. For example, "PB-LA37", "PALBOND 880" or "FERRICOAT 7" manufactured by Nihon Parkerizing Co., Ltd. is used.

(Nanodiamond particle deposition treatment)

The nanodiamond particle dispersion liquid for use in the nanodiamond particle deposition treatment contains nanodiamond particles and a solvent. The concentration of nanodiamond particles in the nanodiamond particle dispersion liquid is preferably 0.01 to 10 mass%, more preferably 0.05 to 5 mass%, and further more preferably 0.1 to 2 mass%. When the concentration of nanodiamond particles in the nanodiamond particle dispersion liquid is 0.01 mass% or more, the amount of nanodiamond particles deposited becomes sufficient, and a sufficient antiviral effect is easily obtained.
Examples of the solvent of the nanodiamond particle dispersion liquid include water, ethanol, methanol, isopropanol, isobutyl alcohol, ethylene glycol, propylene glycol, glycerin, 2-methoxyethanol, dimethylsulfoxide, N-methyl-2-pyrrolidone, acetonitrile, N,N-dimethylformamide, N,N-dimethylacetamide, N,N-diethylformamide, N,N-diethylacetamide, N,N-dimethyl methoxy acetamide, hexamethylphosphoramide, dimethyl sulfone, and propylene carbonate. Only one of or two or more of these solvents may be used. From the viewpoint of safety, handleability, dispersibility and the like, at least water is preferably contained, and a mixed solvent of water and ethanol is more preferred.
The nanodiamond particle dispersion liquid may be contained in various products. Examples thereof include a coating solution, a plating solution, and a chemical conversion treatment solution. The concentration of nanodiamond particles contained in the product is preferably 0.01 to 10 mass%, more preferably 0.05 to 5 mass%, and further more preferably 0.1 to 2 mass%. When the concentration of nanodiamond particles in the nanodiamond particle dispersion liquid is 0.01 mass% or more, the deposition amount of nanodiamond particles becomes sufficient, and a sufficient antiviral effect is easily obtained.
In the nanodiamond particle deposition treatment, the method for depositing nanodiamond particles (coating method) is not particularly limited, and a known or conventional coating method can be used. Examples thereof include a dip coating method, a spray coating method, a roller coating method, a slit coating method, and a spin coating method. Among them, a dip coating method is preferred from the viewpoint of good deposition efficiency.
In the nanodiamond particle deposition treatment, the drying method is not particularly limited, and a known or conventional drying method can be used. Examples thereof include natural drying, vacuum drying, drying in a specific gas environment (the type of gas is not particularly limited, and examples thereof include argon and nitrogen), air blow, and drying by heating. The purpose is to evaporate the solvent, and thus may be achieved by natural drying. Drying by heating at about 100°C may be performed depending on the heat resistance of the substrate.
Each aspect disclosed herein can be combined with any of other characteristics disclosed herein. The configurations in the embodiments, combinations thereof, and the like are illustrative, and addition, omission, replacement, and other changes of the configurations can be made as appropriate without departing from the spirit of the present disclosure. The inventions according to the present disclosure are not limited by embodiments and Examples below, and are only limited by claims.

Examples

Hereinafter, an embodiment of the present disclosure will be described in more detail by way of Examples.

Comparative Example 1

(Method for preparation of material)

A step shown in the schematic diagram of Figure 4 was performed on an aluminum alloy mesh substrate including A5056, thereby preparing a material. More specifically, a surface adjustment step of washing an aluminum alloy mesh substrate with a line diameter of 0.25 μm, a mesh pore size of 0.596 μm, and a pitch of 0.8467 μm, and then immersing the substrate in a surface adjustment solution adjusted to a concentration of 3 g/L, and zinc phosphatization treatment in which the substrate was immersed in a zinc phosphatization treatment solution "PB-LA37" were performed to prepare a material.

Example 1

The following steps were performed on the material prepared in Comparative Example 1, thereby preparing a material.

(Step of preparing nanodiamond particle dispersion liquid)

103.4 g of a ζ(+) nanodiamond stock solution (trade name: "DINNOVARE", manufactured by Daicel Corporation, concentration of nanodiamond particles contained in the stock solution: 2.91 mass%, zeta potential at pH 3.0: +40 mV) was weighed and put in a container, 1.9 g of water and 45.0 g of ethanol were added as solvents, and the mixture was stirred at room temperature to prepare 150 g of a nanodiamond particle dispersion liquid in which nanodiamond particles were uniformly dispersed. Here, the concentration of the nanodiamond particles contained in the nanodiamond particle dispersion liquid was 2.0 mass%.

(Nanodiamond particle deposition treatment)

150 g of the obtained nanodiamond particle dispersion liquid was put in a metal container with a flat bottom, one material prepared by the procedure of Comparative Example 1 was immersed, dipped for 10 seconds, taken out from the nanodiamond particle dispersion liquid, and placed still at a tilt in air for 30 seconds, an excessively deposited dispersion liquid was removed, and the material was then dried in air at room temperature for 3 hours to prepare a material on which nanodiamond particles were deposited.

Examples 2 to 5

Materials on which nanodiamond particles were deposited were prepared in the same manner as in Example 1 except that nanodiamond particle dispersion liquids shown in Table 1 were used. In Examples 4 and 5, a ζ(-) nanodiamond stock solution (trade name: "DINNOVARE", manufactured by Daicel Corporation, concentration of nanodiamond particles contained in the stock solution: 5.68%, zeta potential at pH 9.0: -35 mV) was used as a nanodiamond stock solution. Each of the numerical values as compositions of the nanodiamond particle dispersion liquids in Table 1 indicates "g".

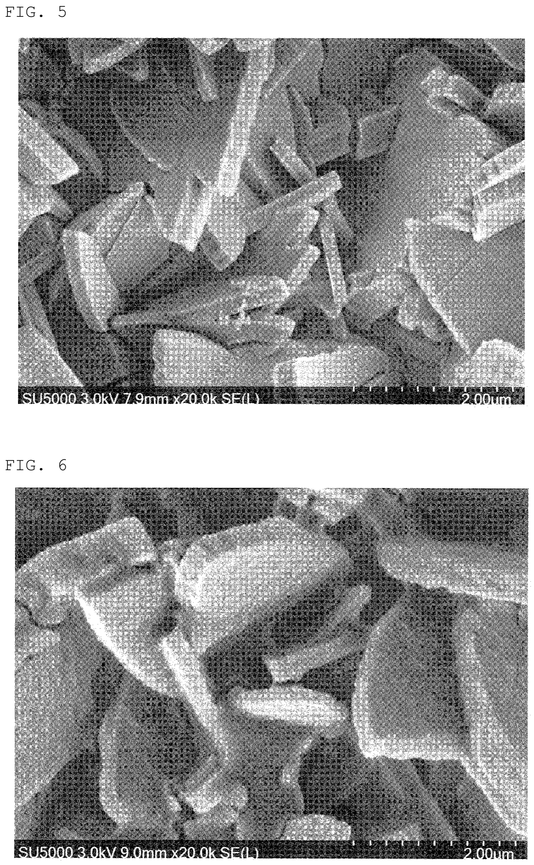

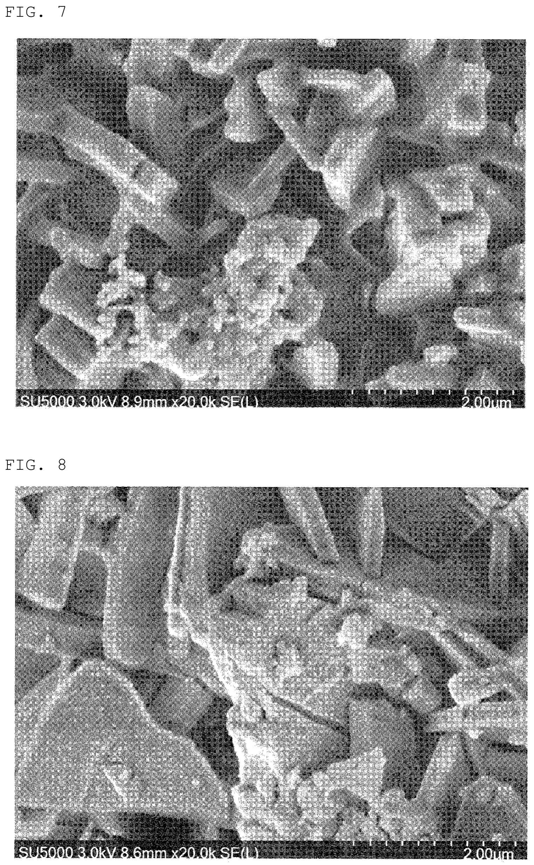

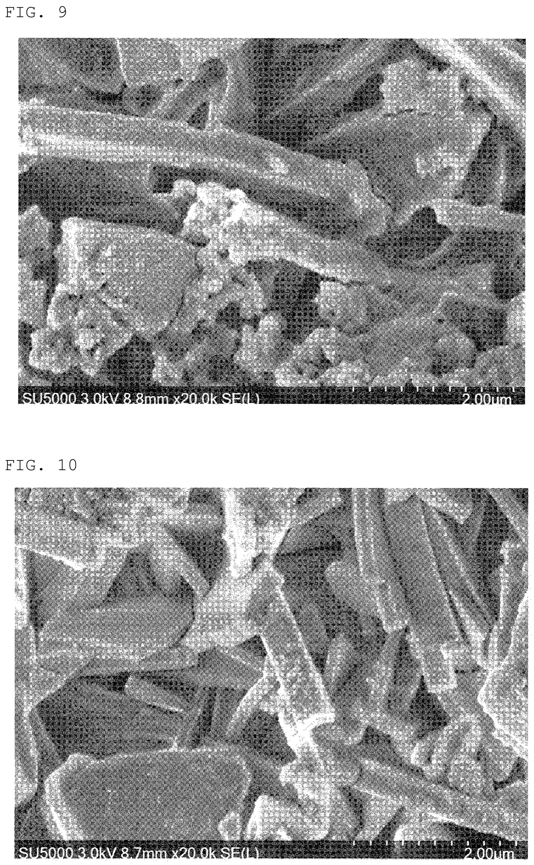

The results of observing the surface conditions of the materials prepared through the above-described steps, by a "method for observation of surface condition" which will be described later are shown in Figures 5 to 10. All of them are 20,000X reflected electron images. In Figure 5 for Comparative Example 1, a state in which a zinc phosphate film having irregularities in the order of microns has been formed is confirmed, and in Figures 6 to 10 for Examples 1 to 5, a state in which nanodiamond particles are further deposited on the irregularities of the zinc phosphate film is confirmed.

Table 1 shows the results of evaluating the materials prepared through the above-described steps, by an "evaluation test for inhibitory performance against viruses" which will be described later.

[Evaluation]

(Evaluation test for inhibitory performance against viruses)

For evaluating the antiviral effect against viruses trapped on the material surface, tests were conducted under the following conditions by referring to The Japan Electrical Manufacturers' Association Standard JEM1467, "Air Purifier for Household Use", Appendix F "Evaluation Test Method for Inhibitory Performance against Virus Trapped on Filter". In all the tests, the following materials were used as a test product or a control product.

- Test product: section of material of each Example or Comparative Example 1 (5 × 5 cm)
- Control product: glass substrate (5 × 5 cm)

As viruses, influenza A virus and Escherichia coli phage designated as index viruses, and feline calicivirus known as an alternative to norovirus were used in the "Evaluation Test Method for Inhibitory Performance against Virus Trapped on Filter". Here, for norovirus that is infectious to humans, the virus is difficult to culture, a method for performing evaluation on an experimental basis has not been established yet, and therefore, feline calicivirus that is structurally similar and closely related to norovirus was used.

(Evaluation test method for inhibitory performance against influenza A virus)

The following virus and host cells were used.

- Influenza A virus: H1N1, A/PR/8/34 (ATCC VR-1469)
- Host cells: MDCK cells (canine kidney cells) (ATCC CCL-34)

(1) 0.1 mL of an influenza A virus solution was dropped onto the control product.
(2) The control product from (1) was immediately washed with MEM (Minimum Essential Medium), PBS (phosphate buffer physiological saline) or sterilized ion-exchange water to recover the virus on the control product. The solution obtained by the step was taken as a 0-second action virus solution for control product.
(3) The control product from (2) was placed still in a test chamber, and after 24 hours, the control product was washed with MEM, PBS or sterilized ion-exchange water to recover the virus on the control product. The solution obtained by the step was taken as a 24-hour action virus solution for control product.
(4) 0.1 mL of the influenza A virus solution was dropped onto each of test products of Examples and Comparative Example.
(5) The test product from (4) was placed still in a test chamber, and after 24 hours, the test product was washed with MEM, PBS or sterilized ion-exchange water to recover the virus on the control product. The solution obtained by the step was taken as a 24-hour action virus solution for test product.
(6) Using the recovered 0-second action virus solution for control product, 24-hour action virus solution for control product, and 24-hour action virus solution for test product as sample stock solutions, 10-fold serial dilution systems were prepared with MEM, PBS or sterilized ion-exchange water.
(7) 100 $\mu$L of the sample stock solution or a dilution solution and 100 $\mu$L of MDCK cells suspended in a medium for MDCK were inoculated in a 96-well plate.
(8) The cells from (7) were cultured with a carbon dioxide incubator, the cytopathogenic effect (CPE) was confirmed under a microscope, and the infectivity titer of the influenza A virus per mL of the washing liquid was determined by the Reed-Muench method.

(Evaluation test method for inhibitory performance against feline calicivirus)

The following virus and host cells were used.

- Feline calicivirus: F-9 (ATCC VR-782)
- Host cells: CRFK cells (feline kidney-derived cell line) (ATCC CCL-94)

(1) 0.1 mL of a feline calicivirus solution was dropped onto the control product.
(2) The control product from (1) was immediately washed with MEM, PBS or sterilized ion-exchange water to recover the virus on the control product. The solution obtained by the step was taken as a 0-second action virus solution for control product.
(3) The control product from (2) was placed still in a test chamber, and after 24 hours, the control product was washed with MEM, PBS or sterilized ion-exchange water to recover the virus on the control product. The solution obtained by the step was taken as a 24-hour action virus solution for control product.
(4) 0.1 mL of the feline calicivirus solution was dropped onto each of test products of Examples and Comparative Example.
(5) The test product from (4) was placed still in a test chamber, and after 24 hours, the test product was washed with MEM, PBS or sterilized ion-exchange water to recover the virus on the control product. The solution obtained by the step was taken as a 24-hour action virus solution for test product.
(6) Using the recovered 0-second action virus solution for control product, 24-hour action virus solution for control product, and 24-hour action virus solution for test product as sample stock solutions, 10-fold serial dilution systems were prepared with MEM, PBS or sterilized ion-exchange water.
(7) 100 $\mu$L of the sample stock solution or a dilution solution and 100 $\mu$L of CRFK cells suspended in a medium for CRFK were inoculated in a 96-well plate.
(8) The cells from (7) were cultured with a carbon dioxide incubator, the cytopathogenic effect (CPE) was confirmed under a microscope, and the infectivity titer of the feline calicivirus per mL of the washing liquid was determined by the Reed-Muench method.

(Evaluation test for virus inhibitory performance against Escherichia coli phage)

The following virus and host cells were used.

- Escherichia coli phage: MS2 (NBRC 102619)
- Host cells: Escherichia coli (NBRC 3012)

(1) 0.1 mL of an Escherichia coli phage solution was dropped onto the control product.

(2) The control product from (1) was immediately washed with MEM, PBS or sterilized ion-exchange water to recover the virus on the control product. The solution obtained by the step was taken as a 0-second action virus solution for control product.

(3) The control product from (2) was placed still in a test chamber, and after 24 hours, the control product was washed with MEM, PBS or sterilized ion-exchange water to recover the virus on the control product. The solution obtained by the step was taken as a 24-hour action virus solution for control product.

(4) 0.1 mL of the Escherichia coli phage solution was dropped onto each of test products of Examples and Comparative Example.

(5) The test product from (4) was placed still in a test chamber, and after 24 hours, the control product was washed with MEM, PBS or sterilized ion-exchange water to recover the virus on the test product. The solution obtained by the step was taken as a 24-hour action virus solution for test product.

(6) Using the recovered 0-second action virus solution for control product, 24-hour action virus solution for control product, and 24-hour action virus solution for test product as sample stock solutions, 10-fold serial dilution systems were prepared with MEM, PBS or sterilized ion-exchange water.

(7) The sample stock solution or a dilution solution and an Escherichia coli liquid medium in which Escherichia coli was cultured were mixed, and the mixture was placed still at $35\pm1°C$ for 10 to 20 minutes.

(8) A soft NB agar medium at 45 to 50°C was added to and mixed with the liquid from (7), and the mixture was stacked on a square dish underlayer medium for fixation.

(9) The system from (8) was turned upside down, the cells were cultured at $35\pm1°C$ for about 16 to 24 hours, the number of plaques generated on the medium was counted, and the number of phages per mL of the washing liquid was determined. The washing liquid was sterilized by filtration.

(Evaluation of antiviral effect)

On the basis of the results of the tests, the logarithmic decrement value of the virus infectivity titer or the number of phages was calculated as an index of the antiviral effect by the following mathematical expression (1).

$$R = Log\ (B/A)\ \ (1)$$

R: Logarithmic decrement value of virus infectivity titer or the number of phages (antiviral effect)
A: Virus infectivity titer or the number of phages after action for 24 hours for control product (glass plate)
B: Virus infectivity titer or the number of phages after action for 24 hours for test product (nanodiamond particle-containing cover of each Example, or section of cover of Comparative Example)

In the present specification, the antiviral effect was evaluated on the basis of the following criteria. Specifically, A was assigned when "there was a sufficient antiviral effect", B was assigned when "there was an antiviral effect", and C was assigned when "there was no antiviral effect".

A: The logarithmic decrement value is 2.0 or more (there is a sufficient antiviral effect).
B: The logarithmic decrement value is not less than 1.0 and less than 2.0 (there is an antiviral effect).
C: The logarithmic decrement value is less than 1.0 (there is no antiviral effect).

Since all the microbial tests were conducted in accordance with JEM1467, "Air Purifier for Household Use", Appendix F "Evaluation Test Method for Inhibitory Performance against Virus Trapped on Filter" (see the Standard for bacteria/fungi), where each microbial solution was dropped onto the test product, and immediately naturally dried before the start of the test, and the microbial solution was allowed to act in a dried state for 24 hours, the result obtained by the test is taken as an antiviral (or antibacterial or antifungal) on a dry surface (in air).

(Method for measurement of zeta potential)

The zeta potential of nanoparticles contained in the nanodiamond particle dispersion liquid was measured by the laser Doppler electrophoresis method using an apparatus manufactured by Malvern Panalytical Ltd (trade name "ZETASIZER NANO ZS"). When the zeta potential was measured, a nanodiamond particle dispersion liquid was subjected to dispersion treatment (for example, ultrasonication) so that the average particle size (D50) of nanodiamond particles contained in the dispersion liquid was 100 nm or less was used. The pH of the nanodiamond particle dispersion liquid was confirmed using a pH test paper (trade name "Three Band pH Test Paper", manufactured by AS ONE Corporation).

(Method for observation of surface condition)

The surface of the material was observed using a scanning electron microscope (SEM) (trade name "SU5000") manufactured by Hitachi High-Tech Corporation. Measurement conditions were set to accelerating voltage: 3.0 kV, spot intensity: 30, and conducting treatment: Pt.

(Method for calculation of amount of nanodiamond particles applied)

The amount (A) of the nanodiamond particles applied per surface area of the material is calculated from a weight gain value (X) and a material surface area (Y) in accordance with the following mathematical expression (2). The weight gain value (X) is calculated by subtracting a weight before application from a weight after application (here, the term "weight after application" refers to a weight after the material after application treatment is dried) in nanodiamond particle deposition treatment. The surface area (Y) of the material is a surface area which is calculated on the assumption that the surface is smooth. That is, for example, when the material has a rectangular flat plate shape, the area of the rectangle which is determined by multiplying the long side by the short side of the rectangle corresponds to the surface area (Y) of the material.

$$A = X/Y \quad (2)$$

[Table 1]

Table 1

| | | | Example 1 | Example 2 | Example 3 | Example 4 | Example 5 | Comparative Example 1 | Control |
|---|---|---|---|---|---|---|---|---|---|
| Nanodiamond particle dispersion liquid | Nanodiamond stock solution | $\zeta$(+) Nanodiamond stock solution | 103.4 | 51.5 | 5.3 | - | - | - | - |
| | | $\zeta$(-) Nanodiamond stock solution | - | - | - | 26.4 | 2.6 | - | - |
| | Solvent | Water | 1.9 | 53.4 | 100.7 | 78.7 | 103.0 | - | - |
| | | Ethanol | 45.0 | 44.9 | 45.3 | 45.0 | 45.2 | - | - |
| Total amount (g) | | | 150.3 | 149.8 | 151.3 | 150.1 | 150.8 | - | - |
| Type of nanodiamond particles | | | $\zeta$ (+) | $\zeta$ (+) | $\zeta$ (+) | $\zeta$ (-) | $\zeta$ (-) | - | - |
| Concentration of nanodiamond particles in dispersion liquid (mass%) | | | 2.00 | 1.00 | 0.10 | 1.00 | 0.10 | - | - |
| Amount of nanodiamond particles applied to functional material (mg/cm$^2$) | | | 0.285 | 0.192 | 0.026 | 0.201 | 0.042 | - | - |
| Inhibitory performance against virus (antiviral effect) | Influenza A virus | Infectivity titer (0 hour) | - | - | - | - | - | - | 1.9.E+06 |
| | | Infectivity titer (24 hours) | 4.0.E+03 | 1.4.E+03 | 1.4.E+03 | 1.9.E+04 | 5.9.E+04 | 1.9.E+05 | 1.8.E+05 |
| | | Logarithmic decrement value | 1.6 | 2.1 | 2.1 | 0.9 | 0.4 | 0.0 | - |
| | | Evaluation result | B | A | A | C | C | C | - |
| | Feline calicivirus | Infectivity titer (0 hour) | - | - | - | - | - | - | 8.3.E+06 |
| | | Infectivity titer (24 hours) | 5.0.E+02 | 3.3.E+02 | 4.0.E+03 | 8.9.E+03 | 1.1.E+04 | 2.7.E+04 | 2.1.E+05 |
| | | Logarithmic decrement value | 2.6 | 2.8 | 1.7 | 1.3 | 1.2 | 0.8 | - |
| | | Evaluation result | A | A | B | B | B | C | - |
| | Escherichia coli phage | Number of phages (0 hour) | - | - | - | - | - | - | 9.0.E+07 |
| | | Number of phages (24 hours) | 1.1.E+05 | 2.2.E+06 | 8.8.E+06 | 1.4.E+07 | 1.1.E+07 | 1.5.E+07 | 1.2.E+07 |
| | | Logarithmic decrement value | 2.0 | 0.7 | 0.1 | 0.0 | 0.0 | 0.0 | - |
| | | Evaluation result | A | C | C | C | C | C | - |

From Table 1, it was apparent that the material of the present disclosure exhibits an excellent antiviral effect against various viruses even on a dry surface assumed as a condition under which a filter is actually used.

Hereinafter, variations of the invention according to the present disclosure are described.

[Supplemental 1] A material comprising a main body portion having a shape of irregularities on a surface thereof, and nanodiamond particles deposited on the irregularities.

[Supplemental 2] The material according to supplemental 1, wherein the main body portion comprises a substrate, and a film formed on the substrate.

[Supplemental 3] The material according to supplemental 2, wherein the substrate is a metal substrate.

[Supplemental 4] The material according to supplemental 3, wherein the metal substrate is a substrate made from aluminum or an aluminum alloy.

[Supplemental 5] The material according to supplemental 3 or 4, wherein the metal substrate is a substrate made from an aluminum alloy.

[Supplemental 6] The material according to any one of supplementals 2 to 5, wherein a shape of the substrate is any one of a mesh shape, a flat plate shape and a nonwoven fabric shape.

[Supplemental 7] The material according to any one of supplementals 2 to 6, wherein the shape of the substrate is a mesh shape.

[Supplemental 8] The material according to any one of supplementals 2 to 7, wherein a thickness of the substrate is 0.1 $\mu$m or more.

[Supplemental 9] The material according to any one of supplementals 2 to 8, wherein the film is a phosphoric acid salt film.

[Supplemental 10] The material according to any one of supplementals 2 to 9, wherein the film is a zinc phosphate film.

[Supplemental 11] The material according to any one of supplementals 2 to 10, wherein a thickness of the film is 0.1 $\mu$m or more.

[Supplemental 12] The material according to any one of supplementals 2 to 11, wherein at least the film has the shape of irregularities.

[Supplemental 13] The material according to any one of supplementals 1 to 12, wherein a distance between convex portions in the irregularities is 0.5 to 50.0 $\mu$m.

[Supplemental 14] The material according to any one of supplementals 1 to 13, wherein a thickness of the main body portion is 0.1 $\mu$m or more.

[Supplemental 15] The material according to any one of supplementals 1 to 14, wherein an average primary particle size of the nanodiamond particles is 100 nm or less.

[Supplemental 16] The material according to any one of supplementals 1 to 15, wherein a lower limit of the average primary particle size of the nanodiamond particles is 1 nm.

[Supplemental 17] The material according to any one of supplementals 1 to 16, wherein the nanodiamond particles include surface-modified nanodiamond particles.

[Supplemental 18] The material according to any one of supplementals 1 to 17, wherein the nanodiamond particles include non-surface-modified nanodiamond particles.

[Supplemental 19] The material according to any one of supplementals 1 to 18, wherein the nanodiamond particles have at least a hydrogen group, a hydroxy group or a carboxy group on surfaces thereof.

[Supplemental 20] The material according to any one of supplementals 1 to 19, wherein a zeta potential of the nanodiamond particles is positive.

[Supplemental 21] The material according to any one of supplementals 1 to 21, wherein the zeta potential of the nanodiamond particles is 5 to 80 mV.

[Supplemental 22] The material according to any one of supplementals 1 to 21, wherein an amount of the nanodiamond particles applied per surface area is 0.02 mg/cm$^2$ or more.

[Supplemental 23] The material according to any one of supplementals 1 to 22, wherein the amount of the nanodiamond particles applied per surface area is 1 mg/cm$^2$ or less.

[Supplemental 24] The material according to any one of supplementals 1 to 23, wherein the nanodiamond particles are detonation nanodiamond.

[Supplemental 25] The material according to supplemental 24, wherein the detonation nanodiamond is air-cooling detonation nanodiamond.

[Supplemental 26] The material according to supplemental 24, wherein the detonation nanodiamond is water-cooling detonation nanodiamond.

[Supplemental 27] The material according to any one of supplementals 1 to 26, which has at least one effect selected from the group consisting of an antiviral effect, an antibacterial effect and an antifungal effect.

[Supplemental 28] The material according to any one of supplementals 1 to 27, which has an antiviral effect.

[Supplemental 29] The material according to supplemental 27 or 28, wherein the virus is an enveloped virus.

[Supplemental 30] The material according to supplemental 29, wherein the enveloped virus is an influenza virus.

[Supplemental 31] The material according to supplemental 27 or 28, wherein the virus is a non-enveloped virus.

[Supplemental 32] The material according to supplemental 31, wherein the non-enveloped virus is feline calicivirus.

[Supplemental 33] The material according to supplemental 32, wherein a logarithmic decrement value of a feline calicivirus infectivity titer is 1.0 or more as evaluated according to ISO 21702: 2019.

[Supplemental 34] A filter with a material in which the material according to any one of supplementals 1 to 33 is attached thereto.

[Supplemental 35] The filter with a material according to supplemental 34, which is used in a gas phase.

[Supplemental 36] The filter with a material according to supplemental 34 or 35, which is used for a vehicle's air conditioner, an air conditioner, or an air purifier.

[Supplemental 37] A nanodiamond particle dispersion liquid for use in preparation of the material according to any one of supplementals 1 to 33, wherein the nanodiamond particle dispersion liquid comprises the nanodiamond particles, and a solvent in which the nanodiamond particles are dispersed, wherein the solvent comprises at least water, and a concentration of the nanodiamond particles contained in the nanodiamond particle dispersion liquid is 0.01 to 10 mass%.

[Supplemental 38] A product comprising the nanodiamond particle dispersion liquid according to supplemental 37, wherein the product is at least one selected from the group consisting of a coating solution, a plating solution, and a chemical conversion solution.

Reference Signs List

1 Filter with material
2 Filter main body
3 Material
30 Purification portion
31 First leg portion
32 Second leg portion
4 Main body portion
41 Substrate
42 Film
42a Convex portion
42b Concave portion
5 Nanodiamond particle

**Claims**

1. A material comprising a main body portion having a shape of irregularities on a surface thereof, and nanodiamond particles deposited on the irregularities.

2. The material according to claim 1, wherein the main body portion comprises a substrate, and a film formed on the substrate.

3. The material according to claim 2, wherein the film is a zinc phosphate film.

4. The material according to claim 1 or 2, wherein a zeta potential of the nanodiamond particles is positive.

5. The material according to claim 1 or 2, which has at least one effect selected from the group consisting of an antiviral effect, an antibacterial effect and an antifungal effect.

6. A filter with a material in which the material according to claim 1 or 2 is attached thereto.

7. The filter with a material according to claim 6, which is used in a gas phase.

8. A nanodiamond particle dispersion liquid for use in preparation of the material according to claim 1 or 2,

wherein the nanodiamond particle dispersion liquid comprises the nanodiamond particles, and a solvent in which the nanodiamond particles are dispersed,

the solvent comprises at least water, and

a concentration of the nanodiamond particles contained in the nanodiamond particle dispersion liquid is 0.01 to 10 mass%.

9. A product comprising the nanodiamond particle dispersion liquid according to claim 8, wherein the product is at least one selected from the group consisting of a coating solution, a plating solution, and a chemical conversion solution.

FIG. 1

FIG. 2

FIG. 3

FIG. 4

| WASHING STEP | → | SURFACE ADJUSTMENT STEP | → | ZINC PHOSPHATIZATION TREATMENT | → | NANODIAMOND PARTICLE DEPOSITION TREATMENT |

FIG. 5

FIG. 6

FIG. 7

SU5000 3.0kV 8.9mm x20.0k SE(L)                    2.00um

FIG. 8

SU5000 3.0kV 8.6mm x20.0k SE(L)                    2.00um

EP 4 744 489 A1

FIG. 9

FIG. 10

21

## INTERNATIONAL SEARCH REPORT

| International application No. |
| --- |
| **PCT/JP2024/024480** |

**A.     CLASSIFICATION OF SUBJECT MATTER**

*A01N 59/00*(2006.01)i; *A01N 25/34*(2006.01)i; *A01P 1/00*(2006.01)i; *C01B 32/28*(2017.01)i; *C09D 1/00*(2006.01)i;
*C09D 17/00*(2006.01)i
FI:     A01N59/00 Z; A01N25/34 Z; A01P1/00; C09D17/00; C01B32/28; C09D1/00

According to International Patent Classification (IPC) or to both national classification and IPC

**B.     FIELDS SEARCHED**

Minimum documentation searched (classification system followed by classification symbols)

A01N59/00; A01N25/34; A01P1/00; C01B32/28; C09D1/00; C09D17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C.     DOCUMENTS CONSIDERED TO BE RELEVANT**

| Category* | Citation of document, with indication, where appropriate, of the relevant passages | Relevant to claim No. |
| --- | --- | --- |
| X | JP 2022-187457 A (CONTINENTAL PHOENIX CO., LTD.) 19 December 2022 (2022-12-19) claims, paragraph [0001], fig. 3 | 1, 5, 8, 9 |
| X | JP 2022-161727 A (DAICEL CORP.) 21 October 2022 (2022-10-21) claims, paragraphs [0022], [0025] | 1, 4, 5, 8, 9 |
| Y | | 2, 6, 7 |
| X | BLAND, H. A. et al., Electropositive nanodiamond-coated quartz microfiber membranes for virus and dye filtration, ACS Appl. Nano Mater., 2021, vol. 4, no. 3, pp. 3252-3261, DOI: 10.1021/acsanm.1c00439 p. 3252, abstract, p. 3253, "Results and Discussion", p. 3258, "Methods and Materials" | 1, 4-6, 8, 9 |
| Y | | 2 |
| X | WO 2022/152974 A1 (DIAMONDTRAP LTD., OY) 21 July 2022 (2022-07-21) claims, p. 6, line 23 to p. 7, line 4, p. 15, line 20 to p.16, line 2, p. 17, lines 27-33 | 1, 4-9 |
| Y | p. 11, line 30 to p. 15, line 19 | 2, 6, 7 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 August 2024** | **17 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/024480**

## C.    DOCUMENTS CONSIDERED TO BE RELEVANT

| Category* | Citation of document, with indication, where appropriate, of the relevant passages | Relevant to claim No. |
|---|---|---|
| X | WO 2021/160178 A1 (MASTER DYNAMIC LTD.) 19 August 2021 (2021-08-19) claims, p. 15, lines 23-25, p. 16, lines 15-18 | 1, 2, 5-9 |
| Y | claims | 2, 6, 7 |
| A | WO 2021/193843 A1 (HONDA MOTOR CO., LTD.) 30 September 2021 (2021-09-30) | 1-9 |

Form PCT/ISA/210 (second sheet) (July 2022)

## INTERNATIONAL SEARCH REPORT
### Information on patent family members

International application No.

**PCT/JP2024/024480**

| Patent document cited in search report | | | Publication date (day/month/year) | Patent family member(s) | | | Publication date (day/month/year) |
|---|---|---|---|---|---|---|---|
| JP | 2022-187457 | A | 19 December 2022 | (Family: none) | | | |
| JP | 2022-161727 | A | 21 October 2022 | (Family: none) | | | |
| WO | 2022/152974 | A1 | 21 July 2022 | FI | 20215043 | A | |
| WO | 2021/160178 | A1 | 19 August 2021 | US | 2023/0105070 | A1 | |
| | | | | CN | 115867159 | A | |
| WO | 2021/193843 | A1 | 30 September 2021 | US | 2023/0345945 | A1 | |
| | | | | CN | 115315275 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023115890 A
- WO 2021193843 A
- JP 2022161727 A
- JP 2023007158 A